# EUROPÄISCHE PATENTANMELDUNG

(11) **EP 3 103 711 A1**
(43) Veröffentlichungstag der Anmeldung: **14.12.2016**
(21) Anmeldenummer: 15171615.6
(22) Anmeldetag: 11.06.2015
(51) Int. Cl.: B62K 3/00, B62K 7/04, B62K 5/00

(54) **TRETROLLER**

(71) Anmelder: Abel, Helmut, 78600 Maisons-Laffitte (FR)
(72) Erfinder: Abel, Helmut, 78600 Maisons-Laffitte (FR); Abel, Céline, 78600 Maisons-Laffitte (FR); Abel, Diane, 78600 Maisons-Laffitte (FR)
(74) Vertreter: Westphal, Mussgnug & Partner Patentanwälte mbB

(57) **Zusammenfassung**

Es wird ein dreirädriger Tretroller mit einem bodennahen Trittbrett (4) beschrieben, an dessen in Fahrtrichtung vorderem Ende eine Steuersäule (1) mit einem Lenkrad (3) und an dessen in Fahrtrichtung hinterem Ende zwei achsparallel im Abstand voneinander drehbar gelagerte Laufräder (6, 6') angeordnet sind. Oberhalb der Laufräder ist eine mit dem Trittbrett (4) verbundene Lastplattform (5) vorgesehen. Die Zuordnung von Steuersäule (1) und Lastplattform (5) zum Trittbrett (4) ist derart asymmetrisch, dass zum einen der Fahrer beim Abstoßen mit seinem Stoßfuß (16') eine von der Lastplattform (5) nicht behinderte Abstoßbewegung durchführen kann und zum andern der Tretroller sowohl während des Abstoßens als auch während der Rollphase auch bei Kurvenfahrten weitgehend kippfrei ist.

## Beschreibung

Die Erfindung betrifft einen Tretroller nach dem Oberbegriff des Hauptanspruchs.

Unter einem Tretroller versteht man ein muskelkraftbetriebenes, in der Regel zweirädriges Kleinfahrzeug mit einem bodennahen Trittbrett, auf dem sich eine Person stehend fortbewegen kann. Hierbei steht die Person mit einem Fuß auf dem Trittbrett, während der Tretroller durch Stoßbewegungen des anderen Fußes, des Stoßfußes, angetrieben wird.

Ein solcher Tretroller ist z.B. in DE 200 19 844 U1 dargestellt. Dieser Tretroller, City-Roller genannt, ist mit einem Transportbehälter ausgestattet, welcher an die Lenkstange der Steuersäule gehängt ist. Ein derartiger Transportbehälter macht den Tretroller kopflastig und behindert außerdem den Fahrer.

Aus DE 20 2007 015 244 U1 ist ein dreirädriger Tretroller bekannt, der auf Grund seiner am hinteren Ende achsparallel und im Abstand von einander angeordneten Laufräder vergleichsweise stabil ist. Bei diesem Tretroller steht der Fahrer mit beiden Füßen auf einem zwischen den Hinterrädern angeordneten Trittbrett, dessen Positionierung allerdings den Antrieb des Rollers mittels des Stoßfußes erschwert.

Günstiger ist die Gestaltung eines dreirädrigen Tretrollers nach EP 2 204 315 B1, bei welchem ein schmales Trittbrett zwischen beidseitige, die hinteren Laufräder lagernden Armen gelegen ist, wodurch ein Freiraum zwischen Trittbrett und den Armen entsteht, in welchen sich der Stoßfuß des Fahrers zur Fortbewegung des Tretrollers bewegen kann. Dieser Tretroller ist mit einem Transportgutbehälter ausgestattet, der jedoch nachteiliger Weise gleichfalls im vorderen Bereich des Tretrollers hinter der Steuersäule angeordnet ist, was sein Volumen und seine Lastaufnahmemöglichkeit zwangsläufig begrenzt.

Im Handel werden schließlich elektromotorisch angetriebene Dreiradroller angeboten, bei welchen mit dem hinteren Ende des Trittbretts eine großflächige Lastgutaufnahme verbunden ist, welche größere und schwerere Transportgüter aufnehmen kann. Bei diesem Roller ist zwar die Lastverteilung günstig; diese Konstruktion ist jedoch nicht für einen muskelbetriebenen Tretroller geeignet, da die hinten gelegene Lastgutaufnahme den Stoßfußantrieb des Rollers durch den Fahrer unmöglich macht.

Aus DE 198 49 361 A1 ist ein Tretroller mit einer Transportgutaufnahme bekannt, welche am hinteren Teil des Trittbrettes symmetrisch zwischen zwei hinteren Laufrädern angeordnet ist. Bei dieser Bauweise kann der Stoßfuß wegen der nach außen abstehenden, hinteren Laufräder keine unbehinderten Stoßbewegungen ausführen, da er an einen der weit nach außen herausragenden hinteren Laufräder anstoßen kann.

Bei einer anderen in dieser Druckschrift gezeigten Variante ist eine seitlich am Trittbrett angeordnete Transportgutaufnahme mit einem diese tragenden Stützrad vorgesehen. Diese seitliche Transportgutaufnahme ermöglicht zwar den Transport sperrigen Gutes. Das Stützrad behindert jedoch eine korrekte Kurvenfahrt des Tretrollers, da das Stützrad hierbei in vertikaler Schrägstellung über den Boden radiert, wodurch es rasch verschleißt und den Roller abbremst.

In DE 20 309 288 U1 ist gleichfalls ein Tretroller mit einer seitlich am Trittbrett angeordneten, von einem Stützrad getragenen Transportgutaufnahme beschrieben, welcher die gleichen oben erläuterten Nachteile aufweist.

Seitlich am Trittbrett, also neben dem Stoßfuß angeordnete Transportgutaufnahmen haben im Übrigen den Nachteil, dass der weit außen arbeitende Stoßfuß den Roller mit der beladenen Transportgutaufnahme vorwärts schieben muss, was dazu führt, dass der Roller die Tendenz in eine unterwünschte Kurvenfahrt hat.

Der vorliegenden Erfindung liegt die Aufgabe zu Grunde, ausgehend von dem beschriebenen Stand der Technik einen Tretroller der im Oberbegriff des Anspruchs 1 genannten Art zu schaffen, welcher die oben beschriebenen Nachteile nicht aufweist, d. h. insbesondere der mit einem großen und hochbelastbaren Transportgutbehälter bestückt ist, welcher jedoch die Kippstabilität des Tretrollers nicht beeinträchtigt.

Gelöst wird diese Aufgabe mit einem Tretroller mit den Merkmalen des Anspruchs 1, die zu einer asymmetrischen Gestaltung des Tretrollers führen, deren seitlich versetzte Lastplattform den Transport voluminöser Transportgüter erlaubt, ohne die Stabilität des Tretrollers im Fahrbetrieb zu beeinträchtigen.

Da nach vorliegender Erfindung die Transportgutaufnahme hinter dem Trittbrett und damit hinter dem Stoßfuß vorgesehen ist, wird der Tretroller durch den Stoßfuß ziehend vorwärts bewegt, wodurch der Tretroller in der gewünschten Bahn bleibt.

Eine besonders günstige Dimensionierung ist Gegenstand des Anspruchs 2.

Weitere Merkmale dieses Tretrollers sind mit den Ansprüchen 3 bis 8 angegeben.

Der Gegenstand der Erfindung ist nachstehend anhand eines in den Zeichnungen dargestellten Ausführungsbeispiels im Einzelnen beschrieben. In den Zeichnungen zeigen in schematischer Weise:
- Fig. 1: Seitenansicht des erfindungsgemäßen Dreirad-Tretrollers, in Fahrtrichtung von rechts gesehen,
- Fig. 2: Aufsicht des Tretrollers gemäß Figur 1 mit angedeuteten Fußstellungen- bzw. bewegungen des Fahrers,
- Fig. 3: Aufsicht des Tretrollers gemäß Figur 1 mit zusätzlichen Abbildungen zur Veranschaulichung der Querverschiebung der Lastplattform und der Steuersäule mit Steuersäulenhaltearm und
- Fig. 4: eine schematische Darstellung der Aufsicht gemäß Figur 2 zur Veranschaulichung der Belastungsverhältnisse.

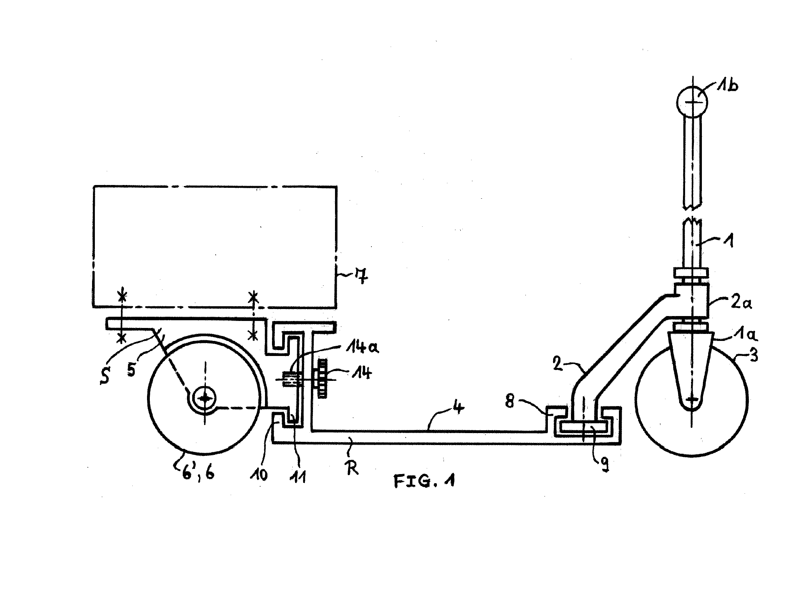

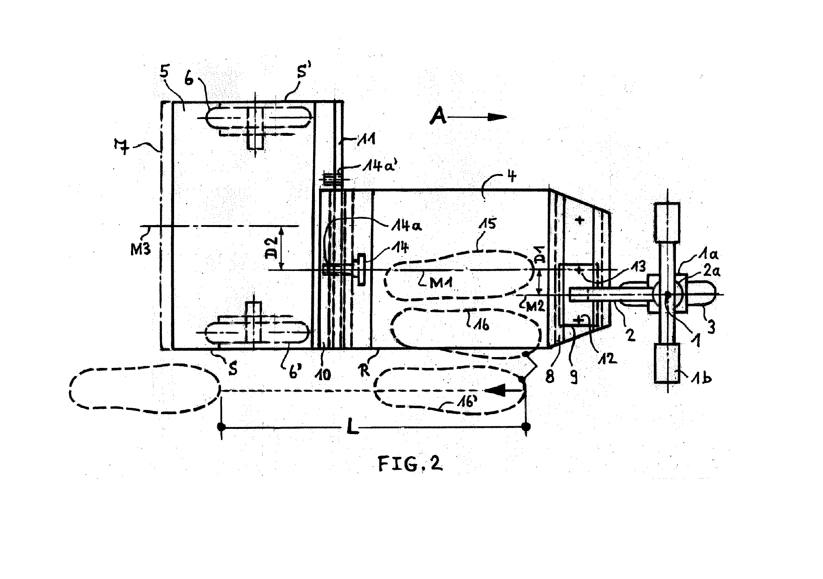

Der grundsätzliche Aufbau des erfindungsgemäßen Tretrollers ist aus den Figuren 1 und 2 ersichtlich.

Dieser Tretroller weist ein vergleichsweise schmales Trittbrett 4 im mittleren Bereich auf, an dessen vorderen Ende über einen Haltearm 2 die Steuersäule 1 mit einer das Lenkrad 3 lagernden Radgabel 1a und einem Lenker 1b angeordnet ist. Eine in Fahrtrichtung vorn gelegene Lagerbuchse 2a nimmt hierbei die Steuersäule 1 verdrehbar auf. Das hintere Ende des Steuersäulenhaltearmes 2 weist einen Befestigungskopf 9 auf, welcher quer verschiebbar in einer schwalbenschwanzförmigen Befestigungsschiene 8 gelegen ist und mit Feststellschrauben 12 und 13 festlegbar ist.

Am hinteren Ende des Trittbrettes 4 befinden sich zwei in größerem Abstand voneinander angeordnete Laufräder 6 und 6' sowie eine oberhalb der Laufräder angeordnete Lastplattform 5 zur Aufnahme eines Transportgutbehälters 7. Die Lastplattform 5 ist in ähnlicher Weise wie der Steuersäulenhaltearm 2 über einen Befestigungskopf 11 in einer schwalbenschwanz gestalteten Befestigungsschiene quer verschiebbar mit dem Trittbrett 4 verbunden. Die Verbindung erfolgt mittels einer Spindelschraube 14, welche alternativ in Gewindelöcher 14a bzw. 14a' der Lastplattform verschraubbar ist.

Der für den erfindungsgemäßen Tretroller typische asymmetrische Aufbau sei zunächst anhand von Figur 2 erläutert.

Die in Form einer Lastplattform 5 ausgebildete Transportgutaufnahme mit ihrer Mittelinie M3 ist bezüglich der Mittellinie M1 des Trittbrettes 4 um die Distanz D2 derart seitlich versetzt, dass die Außenfläche S der Lastplattform 5 mit dem Außenrand R des Trittbrettes 4 fluchtet. Durch diese Maßnahme ist ein Freiraum für den rechten Stoßfuß 16, 16' geschaffen, der bei der Bewegung des Tretrollers in Richtung des Pfeiles A völlig ungehindert einen kräftigen und auch sehr langen Fußabstoß L erzeugen kann, ohne mit der Lastplattform 5 und dem auf dieser befindlichen Transportgutbehälter 7 zu kollidieren.

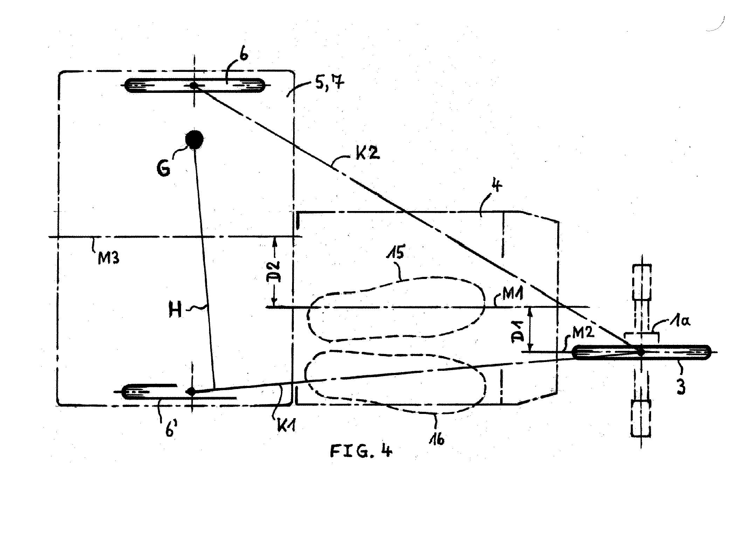

Auch die Steuersäule 1 mit ihrem Steuersäulenhaltearm 2, dessen Mittellinie mit M2 bezeichnet ist, ist bezüglich der Mittellinie M1 des Trittbrettes 4 um die Distanz D1 seitlich versetzt, was wie der Versatz D2 der Lastplattform 5 zur Stabilität des Tretrollers bei seiner Bewegung in Richtung des Pfeiles A beiträgt und für eine bequeme Haltung des Fahrers, der sich mit seinem linken Fuß 15 auf dem Trittbrett 4 abstützt, sorgt. Wie nachstehend noch anhand von Figur 4 erläutert ist, ist die exzentrische Anordnung der Laufräder 6 und 6' unterhalb der Lastplattform 5 nahe ihrer seitlichen Außenflächen S und S' für die Kippstabilität sowohl während der Abstoßphase als auch während der Rollphase wichtig.

Der in Figur 2 in Aufsicht dargestellte Tretroller ist für "Rechtsfüßler" eingestellt, d.h. für Fahrer, die stets nur ihren rechten Fuß zum Abstoßen benutzen.

Die lösbare Verbindung der Lastplattform 5 sowie des Steuersäulenhaltearms 2 mit dem Trittbrett 4 ermöglicht in einfacher und schneller Weise eine Umrüstung des Tretrollers für "Linksfüßler".

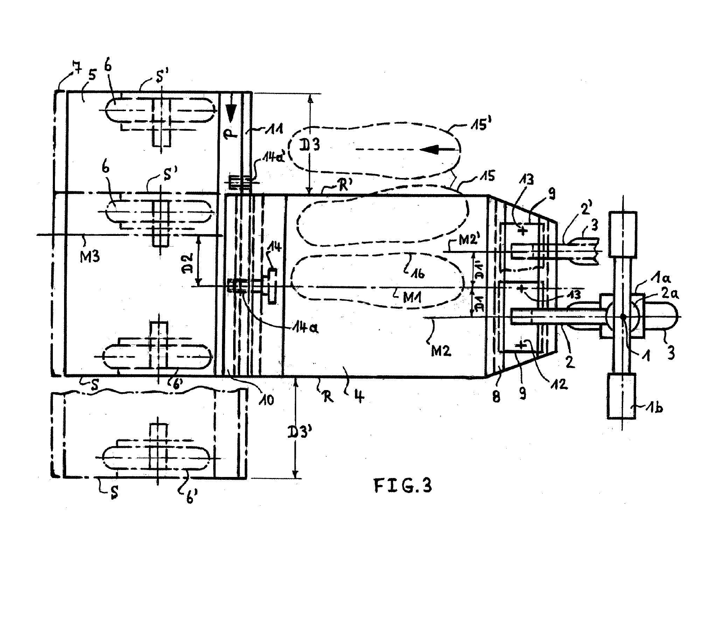

Wie mit Figur 3 veranschaulicht, kann die Steuersäule 1 nach Lösen der beiden Feststellschrauben 12, 13 in Fahrtrichtung gesehen nach links um die Distanz D1 + D1' in die links gelegene Position verschoben werden, welche mit der Mittellinie M2' des Haltearms 2 veranschaulicht ist. Nach diesem Verschiebevorgang ist der Befestigungskopf 9 des Steuersäulenhaltearms 2 wieder zu verschrauben, um diesen gegen seitliches Verrutschen zu sichern.

Ferner ist nach Lösen der Spindelschraube 14 die Lastplattform 5 in Fahrtrichtung gesehen nach rechts um die Distanz D3 zu verschieben, sodass nunmehr die Außenfläche S' der Lastplattform 5 mit dem in Fahrtrichtung links befindlichen Außenrand R' des Trittbrettes 4 fluchtet. Die in Fahrtrichtung rechts gelegene Seite der Lastplattform 5 ist um die Distanz D3' verschoben. Die Lastplattform 5 wird hiernach mittels der Spindelschraube 14, welche in das Gewindeloch 14'a einzusetzen ist, festgelegt. Durch diese Maßnahme ist ähnlich wie anhand von Figur 2 erläutert, Platz für eine langhubige Abstoßbewegung des linken Fußes aus der Position 15' geschaffen. Anders als bei der Anordnung nach Figur 4 ist nunmehr der rechte Fuß 16 des Fahrers Standfuß, welcher während der Abstoßbewegung des Stoßfußes 15' hinter der Steuersäule 1 auf dem Trittbrett 4 bleibt.

Die große Kippstabilität des erfindungsgemäßen Tretrollers ist in einer schematischen Darstellung der Aufsicht von Figur 2 anhand von Figur 4 erläutert.

Nach jedem Abstoßvorgang stellt der Fahrer, hier ein "Rechtsfüßler", seinen Stoßfuß 16 neben seinem Standfuß 15 auf dem Trittbrett 4 ab, um bequem und sicher davonzurollen. Selbst bei schnellem Durchfahren von Kurven bleibt aus folgenden Gründen dieser Tretroller völlig kippstabil.

In der Darstellung gemäß Figur 4 sind zu Erläuterungszwecken folgende Linien und Punkte eingetragen.

Als Kipplinie K1 ist die Verbindung zwischen dem Lenkrad 3 und dem hier rechten Hinterrad 6' bezeichnet. Die Verbindungslinie zwischen dem Lenkrad 3 und dem linken Hinterrad 6 ist als Kipplinie K2 bezeichnet.

Mit der Linie H ist der Abstand des Schwerpunktes G der Lastplattform 5 mit Transportgutbehälter 7 von der Kipplinie K1 definiert.

Hieraus ergeben sich folgende Belastungsverhältnisse.

Der stets höher belastete Standfuß 15 des Fahrers befindet sich immer zwischen den beiden Kipplinien K1 und K2 und verleiht dem Tretroller satten Kontakt mit der Fahrbahn.

Der meist weniger belastete sich hier in Ruhestellung befindliche Stoßfuß 16 ist zwar oberhalb der Kipplinie K1 platziert, kann aber einerseits wegen viel zu geringer Hebelwirkung nicht bewirken, dass der Tretroller in Fahrtrichtung nach rechts gesehen umkippt. Andererseits kann er auch nicht dem mit dem Schwerpunkt G symbolisierten Gewicht des nach außen herausragenden Abschnittes der Lastplattform 5 mit Transportgutbehälter 7 entgegenwirken, da das in Punkt G angreifende Gewicht gänzlich dank des langen Hebelarmes H verhindert, dass der Tretroller nach rechts über die Kipplinie K1 umkippt. Ein Umkippen des Tretrollers über die Linie K2 nach links ist, insbesondere wenn der Transportgutbehälter 7 beladen ist, fast unmöglich.

Es versteht sich, dass das erfindungsgemäße Konzept auch in anderer Weise realisiert werden kann. In an sich bekannter Weise können die Bauteile des Tretrollers insbesondere für industrielle Anwendungen verstärkt oder mit einem stärker dimensionierten Chassis verbunden werden.

Bei höheren Lasten können anstelle der einfachen Räder hochbelastbare Zwillingsräder verwendet werden.

Auch die fest bzw. variable Verbindung der Steuersäule bzw. der Lastplattform mit dem Trittbrett kann in anderer Weise realisiert werden.

### Bezugszeichenliste

- 1: Steuersäule
- 1a: Radgabel
- 1b: Lenker
- 2: Steuersäulenhalterarm
- 2a: Lagerbuchse
- 3: Lenkrad
- 4: Trittbrett
- 5: Lastplattform
- 6, 6': hintere Laufräder
- 7: Transportgutbehälter
- 8, 10: schwalbenschwanzförmige Befestigungsschienen
- 9, 11: Befestigungskopf
- 12, 13: Feststellschrauben
- 14: Feststellschraube in Form einer Spindelschraube
- 14a, 14a': Gewindeloch
- 15, 15': linker Fahrerfuß
- 16, 16': rechter Fahrerfuß
- A: Bewegungsrichtung des Tretrollers
- M1: Mittellinie des Trittbrettes 4
- M2, M2': Mittellinie des Steuersäulenhaltearmes 2
- M3: Mittellinie der Lastplattform 5
- R, R': Außenrand des Trittbrettes 4
- S, S': Außenfläche der Lastplattform 5
- P: Richtungspfeil
- L: Länge des Stoßhubes
- H: Hebelarm
- G: Schwerpunkt des nach außen herausragenden Abschnittes der Transportgutaufnahme 5 mit Transportgutbehälter 7
- K1, K2: Kipplinien
- D1, D1': Versatz der Steuersäule 1
- D2, D3, D3': Versatz der Lastplattform 5

## Patentansprüche

1. Tretroller mit einem bodennahen Trittbrett (4), an dessen in Fahrrichtung vorderem Ende eine Steuersäule (1) mit wenigstens einem Lenkrad (3) drehbar angeordnet ist und an dessen in Fahrtrichtung hinterem Ende zwei Laufräder (6, 6') achsparallel im Abstand voneinander drehbar gelagert sind, und mit einer Transportgutaufnahme,
**dadurch gekennzeichnet, dass** die Transportgutaufnahme eine bezüglich des Trittbrettes (4) seitlich versetzte Lastplattform (5) ist, die mit dem hinteren Ende des Trittbrettes (4) verbunden ist und deren dem Stoßfuß des Fahrers benachbarte Außenfläche (S) mit dem Außenrand (R) des Trittbrettes (4) fluchtet, während die gegenüberliegende Außenfläche (S') sich in einem größeren Abstand zum Trittbrett (4) befindet, wobei die hinteren Laufräder (6, 6') jeweils nahe den Außenflächen (S, S') der Lastplattform (5) und unter derselben angeordnet sind.

2. Tretroller nach Anspruch 1,
**dadurch gekennzeichnet, dass** der Abstand der Mittelinie (M1) des Trittbretes (4) von der außenfläche (S') größer ist als der Abstand der Mittellinie (M1) vom Außenrand (R) und der Außenfläche (S).

3. Tretroller nach Anspruch 1 oder 2,
**dadurch gekennzeichnet, dass** der Schwerpunkt (G) des nach außen herausragenden Abschnittes der Lastplattform (5) mit Transportgutbehälter (7) nahe des äußeren hinteren Laufrades (6) liegt.

4. Tretroller nach Anspruch 1, 2 oder 3,
**dadurch gekennzeichnet, dass** die Steuersäule (1) mit ihrer Halterung (2) und/oder die Lastplattform (5) bezüglich des Trittbrettes (4) quer verschiebbar sind.

5. Tretroller nach Anspruch 4,
**dadurch gekennzeichnet, dass** die Halterung (2) der Steuersäule (1) und/oder die Lastplattform (5) mit dem Trittbrett (4) über schwalbenschwanzförmige Befestigungsschienen (8, 10) verbunden sind und mittels Feststellschrauben (12, 13, 14) arretierbar sind.

6. Tretroller nach Anspruch 4 oder 5,
**dadurch gekennzeichnet, dass** die Halterung der Steuersäule ein Haltearm (2) ist, der an seinem in Fahrtrichtung vorderen Ende eine Lagerbuchse (2a) für die Steuersäule (1) und an seinem hinteren Ende einen Befestigungskopf (9) zur festen oder lösbaren Verbindung mit dem Trittbrett (4) aufweist.

7. Tretroller nach Anspruch 4 oder 5,
**dadurch gekennzeichnet, dass** die Lastplattform (5) an ihrem in Fahrtrichtung vorderen Ende einen Befestigungskopf (11) aufweist, welcher in die schwalbenschwanzförmige Befestigungsschiene (10) eingreift.

8. Tretroller nach einem der Ansprüche 1 bis 7,
**dadurch gekennzeichnet, dass** die Laufräder und/oder das Lenkrad Zwillingsräder sind.
